# FASCICULE DE BREVET EUROPEEN

(11) **EP 1 719 716 B1**
(45) Date de publication et mention de la délivrance du brevet: **15.07.2009**
(21) Numéro de dépôt: 06380100.5
(22) Date de dépôt: 03.05.2006
(51) Int. Cl.: B65G 17/32

(54) **Chaîne de transport avec pinces de retenue**
Förderkette mit Greifklemmen
Conveyor chain with holding clamps

(30) Priorité: 04.05.2005 ES 200500998 U
(43) Date de publication de la demande: 08.11.2006
(73) Titulaire: 2000 Transmisiones Europa, S.A., 20600 Eibar (Gipuzkoa) (ES)
(72) Inventeur: Velar Aramburu, Juan Angel, 20600 Eibar (Gipuzkoa) (ES)
(74) Mandataire: Urizar Barandiaran, Miguel Angel

(56) Documents cités:
- DE-A1- 4 208 225
- DE-U1- 8 531 022
- FR-A- 2 599 011
- GB-A- 789 527

## Description

Dans l'état actuel de la technique, on connaît déjà les chaînes à maillons utilisées qui font partie par exemple de chaînes de transport ou de transporteurs à chaînes, avec des chaînes à maillons situées de chaque côté d'un transporteur à bande.

Par exemple, dans le brevet espagnol 531.972 de technologie ancienne, chaque chaîne de transport présente des maillons de chaîne et des pinces de retenue qui y sont fixées pour presser un bord de la bande, avec une partie de pince fixe, reliée au maillon de chaîne correspondant et une partie de pince mobile, un ressort de compression pour la précontrainte de la partie de pince mobile qui est amenée en position fermée et un élément d'attaque qui peut être emboîté dans la partie de la pince mobile le long d'une partie de la course de la chaîne.

Un problème (non résolu avec cette technologie conventionnelle) surgit lorsque de grands efforts sont nécessaires, dans des espaces très réduits. Dans ce cas, avec un seul ressort, on court le grave risque de casser la clavette, suivi du danger de blocage de la machine ou du transporteur correspondant.

L'objet de l'invention est une chaîne de transport avec des pinces de retenue qui sont structurées en plusieurs chaînons articulés entre eux au moyen de chevilles baguées sur des rouleaux avec des gaines interposées et où chaque chaînon extérieur est associé à une pince de retenue avec un volet muni d'un jeu de bague/piton centré contre lequel un ressort fait pression, ladite chaîne étant caractérisée par le fait que :
a) deux ressorts font pression contre l'ensemble bague/piton centré pour supporter la charge répartie sur les deux ressorts ;
b) ces ressorts ont une disposition concentrique entre eux et coaxiale entre eux et avec l'ensemble bague/piton.

Et notamment :
- les ressorts présentent entre eux une constante élastique différente.
- le rapport de charges qui supportent les ressorts est d'environ, 7 : 3.

Cette répartition des efforts réduit le risque de rupture du ressort et par conséquent diminue le risque de blocage de la machine

Pour cela, la chaîne de transport avec des pinces de retenue constitue une invention nouvelle qui implique une activité inventive avec des possibilités d'application industrielle.

Pour mieux comprendre l'objet de la présente invention, une forme choisie de réalisation pratique a été représentée sur les plans, susceptible de changements accessoires qui ne modifieront pas son fondement.

La figure 1 représente une vue générale en élévation -figure 1a-, horizontale -figure 1b- et de profil -figure 1c- d'une chaîne de transport avec des pinces de retenue structurée selon l'état actuel de la technique.

La figure 2 représente une vue générale en élévation -figure 2a- et de profil -figure 2b- d'une chaîne de transport avec des pinces de retenue structurée selon l'objet de la présente invention avec les deux ressorts (8) disposés de manière coaxiale entre eux ainsi que par rapport à la bague (10) et au piton (11).

Un exemple de réalisation pratique non limitatif de la présente invention est décrit ci-après, sans pour autant éliminer d'autres modes de réalisation où des changements accessoires ne modifiant pas son fondement sont introduits. La présente invention englobe bien au contraire toutes ses variantes.

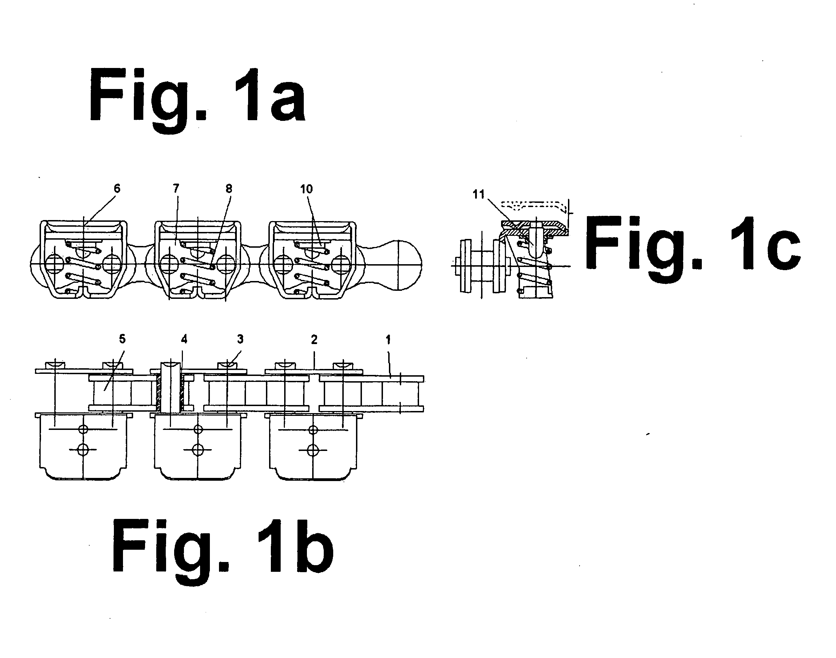

L'objet de l'invention se situe dans le secteur industriel des chaînes de transport avec des pinces de retenue :
- les chaînes de transport étant structurées en plusieurs chaînons (1), (2) articulés entre eux au moyen de chevilles (3) baguées sur des rouleaux (5) avec des gaines (4) interposées - voir figure 1 b- et
- les pinces de retenue étant structurées dans un corps (5) avec un volet (7) muni d'un jeu de bague (10) et piton (11) centré contre lesquels un seul ressort (8) fait pression reposant contre la paroi opposée du corps (6) -voir figure 1a-.

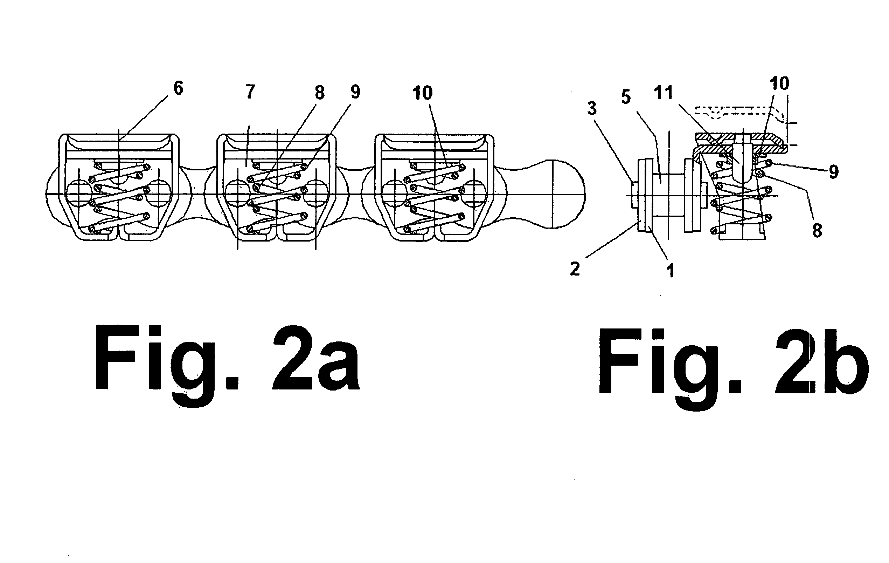

Conformément à l'invention et selon la réalisation représentée - voir figure 2 - deux ressorts (8) et (9) sont posés sur la pince de retenue, les deux étant guidés dans l'ensemble bague (10)/piton (11) et les deux reposant contre la paroi opposée du corps (6).

Ces deux ressorts (8), (9) sont disposés de manière coaxiale entre eux - voir figures 2a et 2b-.

Ces ressorts (8), (9) présentent notamment une constante élastique différente : l'effort supporté par chacun est différent. Le rapport d'efforts supportés est d'environ 70 % - 30 %.

## Revendications

1. Chaîne de transport avec des pinces de retenue, structurée en plusieurs charnons (1), (2) articulés entre eux au moyen de chevilles (3) baguées sur des rouleaux (5) avec des gaines (4) interposées et où chaque maillon extérieur est associé à une pince de retenue (6) avec un volet (7) muni d'un jeu de bague (10)/piton (11) contre lequel un ressort (8) fait pression, **caractérisée par le fait que** :
a) deux ressorts (8), (9) sont disposés pour faire pression contre l'ensemble bague(10)/piton (11) centré pour supporter la charge répartie sur les deux ressorts (8), (9) ;
b) ces ressorts ont une disposition concentrique entre eux et coaxiale entre eux et avec l'ensemble bague(10)/piton(11).

2. Chaîne de transport avec pinces de retenue selon la revendication précédente **caractérisée par le fait que** les ressorts (8), (9) présentent une constante élastique différente.

3. Chaîne de transport avec pinces de retenue selon les revendications précédentes **caractérisée par le fait que** le rapport de charge que les ressorts (8), (9) supportent est d'environ 7 : 3.

## Claims

1. Conveyor chain with holding clamps, of the type structured on a number of links (11, (2) articulated together through pins (3) ferruled on rollers (5) with interposition of sheaths (4); where each outer link carries with it a holding clamp (6) with a clamp flap (7) equipped with a bushing set (1 0)/spline (11) centered against which a spring presses (8); **characterized** because:
a) two springs are in place (8), (9) pressed against the bushing set (10)/spline (11) centered to support the load distributed between both springs (8), (9);
b) said springs are mutually positioned concentrically and both mutually coaxial and coaxial in relation to the bushing set (10)/spline (11).

2. Conveyor chain with holding clamps, according to the aforementioned claim, **characterized** because the springs (8), (9) present between each other different elastic constant.

3. Conveyor chain with holding clamps, according to the aforementioned claims, **characterized** because, specifically, the load ratio borne by the springs (8), (9) is approximately 7 : 3.

## Patentansprüche

1. Förderkette mit Greifklemmen, die sich aus einer Vielzahl aus Kettengliedern (1) zusammensetzt, die untereinander (2) gelenkig anhand von in Rollen (5) mit dazwischen geschobenen Hülsen (4) verbuchsten Stiften (3) verbunden sind; und wo jedem Außenkettenglied eine Greiferklemme (6) mit Klemmenflügel (7) zugeordnet ist, der mit einem Satz aus zentrierter Hülse (10) / Höcker (11) versehen ist und gegen den eine Feder drückt, die sich **dadurch kennzeichnet, dass**
a) zwei gegen den Satz aus zentrierter Hülse (10) / Höcker (11) gedrückte Federn (8), (9) angeordnet werden, um die Belastung zwischen beiden Federn (8), (9) geteilt zu tragen;
b) diese Federn untereinander konzentrisch, sowie koaxial untereinander und in bezug auf den Hülsen- (10) / Höcker- (11) Satz angeordnet werden.

2. Förderkette mit Greifklemmen laut obigem Patentanspruch, die sich **dadurch kennzeichnet, dass** die Federn (8), (9) untereinander eine unterschiedliche elastische Konstante darstellen.

3. Förderkette mit Greifklemmen laut obigem Patentanspruch, die sich insbesondere **dadurch kennzeichnet, dass** das Belastungsverhältnis, das die Federn (8), (9) aufnehmen müssen, ca. 7:3 entspricht.
